# EUROPÄISCHE PATENTSCHRIFT

(11) **EP 3 345 524 B1**
(45) Veröffentlichungstag und Bekanntmachung des Hinweises auf die Patenterteilung: **03.03.2021**
(21) Anmeldenummer: 18150681.7
(22) Anmeldetag: 09.01.2018
(51) Int. Cl.: A47L 9/28

(54) **VERFAHREN ZUM BETRIEB EINES BODENBEARBEITUNGSGERÄTES**
METHOD FOR OPERATING A SOIL-WORKING IMPLEMENT
PROCÉDÉ DE FONCTIONNEMENT D'UN APPAREIL DE TRAITEMENT AU SOL

(30) Priorität: 10.01.2017 DE 102017100366
(43) Veröffentlichungstag der Anmeldung: 11.07.2018
(73) Patentinhaber: Vorwerk & Co. Interholding GmbH, 42275 Wuppertal (DE)
(72) Erfinder: Schönhoff, Helmut, 42897 Remscheid (DE); Jentsch, Jochen, 13505 Berlin (DE); Schmidt, Dirk, 51688 Wipperfürth (DE); Schweppe, Sabine, 40789 Monheim (DE); Windorfer, Harald, 40822 Mettmann (DE); Blum, Michael, 42289 Wuppertal (DE); Hahn, Pia, 58332 Schwelm (DE); Zabback, Iris, 42289 Wuppertal (DE); Arnold, Hans-Peter, 58566 Kierspe (DE); Liß, Raphael, 53225 Bonn (DE); Brede, Maike, 58454 Witten (DE)
(74) Vertreter: Müller, Enno

(56) Entgegenhaltungen:
- WO-A1-2015/120470
- WO-A1-2015/178855
- WO-A2-2009/102970
- DE-A1-102015 006 014
- KR-A- 20120 126 772
- KR-B1- 100 645 818
- US-B1- 9 043 021

## Beschreibung

### Gebiet der Technik

Die Erfindung betrifft ein Verfahren zum Betrieb eines Bodenbearbeitungsgerätes, wobei sich das Bodenbearbeitungsgerät über eine zu bearbeitende Fläche bewegt und eine Bearbeitung der Fläche, nämlich eine Reinigung der Fläche, in Abhängigkeit von einem Flächenparameter der Fläche durchführt, wobei der Flächenparameter eine Bodenart und/oder ein Verschmutzungsgrad ist, wobei ein Geräteparameter des Bodenbearbeitungsgerätes für die Bearbeitung der Fläche in Abhängigkeit von dem Flächenparameter variiert wird, wobei der Flächenparameter mit in einer Datenbank hinterlegten Referenzflächenparametern verglichen wird, und wobei ein zu einem dem Flächenparameter nächstliegenden Referenzflächenparameter korrespondierender Geräteparameter ausgewählt wird, wobei mehrere Bodenbearbeitungsgeräte auf die Datenbank zugreifen und einen Geräteparameter und/oder einen Flächenparameter und/oder eine Änderung eines Flächenparameters und/oder einen Referenzflächenparameter zur gemeinsamen Nutzung in der Datenbank hinterlegen und/oder auswählen.

Zudem betrifft die Erfindung ein System aus mindestens zwei Bodenbearbeitungsgeräten und mindestens einem gemeinsamen Server, auf welchen die Bodenbearbeitungsgeräte zugreifen, wobei die Bodenbearbeitungsgeräte eingerichtet sind, sich über eine zu bearbeitende Fläche zu bewegen und die Fläche in Abhängigkeit von einem Flächenparameter der Fläche, nämlich einer Bodenart und/oder einem Verschmutzungsgrad der Fläche, zu bearbeiten, nämlich zu reinigen, und wobei die Bodenbearbeitungsgeräte eingerichtet sind, einen Geräteparameter des Bodenbearbeitungsgerätes für die Bearbeitung der Fläche in Abhängigkeit von dem Flächenparameter einzustellen, wobei der Server eine den Bodenbearbeitungsgeräten gemeinsam zugeordnete Datenbank aufweist, in welcher ein Geräteparameter und/oder ein Flächenparameter und/oder ein Referenzflächenparameter und/oder eine Änderung eines Flächenparameters hinterlegt ist.

### Stand der Technik

Bodenbearbeitungsgeräte der vorgenannten Art sind im Stand der Technik bekannt. Diese können bspw. handgeführt oder selbsttätig fortbewegbar ausgebildet sein.

Die Druckschrift EP 1 691 657 B1 offenbart bspw. ein selbsttätig verfahrbares Bodenreinigungsgerät, welches zur Feuchtreinigung von Oberflächen, bspw. Fliesenböden, geeignet ist. Die Druckschrift EP 1 437 958 B1 offenbart des Weiteren ein Saug-/Kehrgerät, welches sich selbsttätig fortbewegen kann.

Die WO 2015/120470 A1 offenbart des Weiteren ein System aus mehreren landwirtschaftlichen Maschinen, die gemeinsam eine Fläche bearbeiten, wobei Teilumgebungen innerhalb einer gemeinsamen Umgebungskarte so aufgeteilt werden, dass es nicht zu einer mehrfachen Bearbeitung einer bereits bearbeiteten Fläche kommt.

In der Praxis sollen Bodenbearbeitungsaktivitäten häufig auf eine Bodenart, bspw. Hartboden und/oder Teppichboden, abgestimmt werden. Insbesondere soll bspw. sichergestellt werden, dass Flüssigkeiten nur auf solche Flächen aufgetragen werden, die dafür geeignet sind. Daher ist es im Stand der Technik des Weiteren bekannt, derartige Bodenbearbeitungsgeräte mit einer Detektionseinrichtung zum Detektieren einer Bodenart der zu bearbeitenden Fläche auszustatten. Die Detektionseinrichtung kann bspw. eine Kamera sein, welche fotografische Aufnahmen der Oberfläche erstellt. Diese fotografischen Aufnahmen werden ausgewertet, um die Bodenart zu bestimmen. Ein Verfahren gemäß dem Oberbegriff des Anspruchs 1 ist aus der US 9 043 021 B1 bekannt.

### Zusammenfassung der Erfindung

Ausgehend von dem vorgenannten Stand der Technik ist es Aufgabe der Erfindung, ein Verfahren zum Betrieb eines Bodenbearbeitungsgerätes so weiterzubilden, dass ein optimales Bearbeitungsergebnis mittels des Bodenbearbeitungsgerätes erreicht werden kann.

Zur Lösung der vorgenannten Aufgabe schlägt die Erfindung vor, dass ein Bodenbearbeitungsgerät eine Bodenbearbeitung gemäß eines ausgewählten Geräteparameters durchführt und nach abgeschlossener Bodenbearbeitung erneut den Flächenparameter der bearbeiteten Fläche detektiert und an die Datenbank übermittelt, wobei die Datenbank den Flächenparameter in Verbindung mit den zur Flächenbearbeitung verwendeten Geräteparametern abspeichert und in Abhängigkeit von einem erzielten Reinigungsergebnis einen in der Datenbank gespeicherten Geräteparameter anpasst, und wobei die Änderung des Flächenparameters in der Datenbank hinterlegt und mit den vorher angewendeten Geräteparametern verknüpft wird, so dass in der Datenbank eine Information darüber gespeichert ist, welche Geräteparametereinstellung zu welchem Bodenbearbeitungsergebnis geführt hat.

Erfindungsgemäß sieht das Verfahren vor, dass mehrere Bodenbearbeitungsgeräte Geräteparameter, Flächenparameter, Referenzflächenparameter und/oder Änderungen von Flächenparametern miteinander teilen, indem sie diese in einer gemeinsamen Datenbank hinterlegen. Auf diese Datenbank kann jedes der Bodenbearbeitungsgeräte zugreifen. Dabei können die Daten auch von Bodenbearbeitungsgeräten verwendet werden, welche die Daten selbst nicht detektiert haben. Es kann somit unter Beteiligung mehrerer Bodenbearbeitungsgeräte eine umfassende Datenbank mit Geräteparametern, Flächenparametern, Referenzflächenparametern und Änderungen von Flächenparametern erstellt werden. Die umfangreiche Datensammlung der Datenbank verbessert einen Erfolg einer Flächenbearbeitung, da bspw. eine Genauigkeit der vorgeschlagenen Geräteparameter aufgrund der großen Vielzahl der zuvor detektierten Flächenparameter für dieselbe oder eine ähnliche Fläche erhöht werden kann. Ein Bodenbearbeitungsgerät, welches nach dem erfindungsgemäßen Verfahren arbeitet, muss die Datenbank somit nicht mit ausschließlich selbst detektierten Parametern füllen, sondern kann auch auf Geräteparameter, Referenzflächenparameter, Flächenparameter und deren Änderungen zugreifen, welche von anderen Bodenbearbeitungsgeräten stammen. Die in der Datenbank hinterlegten Parameter können dann zum Zwecke einer daran angepassten Bodenbearbeitungsstrategie genutzt werden, und insbesondere auch für zukünftige Bearbeitungseinsätze abrufbar zur Verfügung stehen. Die Erfassung eines Flächenparameters kann durch das Bodenbearbeitungsgerät selbständig in einem Erfassungsmodus erfolgen. Dabei wird eine zu bearbeitende Fläche überfahren und ermittelte Flächenparameter an die Datenbank übertragen. Des Weiteren ist es auch möglich, dass ein Nutzer eines Bodenbearbeitungsgerätes manuell auf die Datenbank zugreift und Geräteparameter, Flächenparameter, Referenzflächenparameter und/oder Änderungen von Flächenparametern abspeichert und/ oder überprüft und korrigiert. Vor einer Bearbeitung einer Fläche kann dann beispielsweise eine Recheneinrichtung des betreffenden Bodenbearbeitungsgerätes anhand eines Regelwerks die optimalen Geräteparameter zur Bearbeitung der Fläche ausrechnen und diese dem Bodenbearbeitungsgerät zur Verfügung stellen. Bei der Berechnung vergleicht die Recheneinrichtung die aktuellen Flächenparameter der zu bearbeitenden Fläche mit in der Datenbank hinterlegten Referenzflächenparametern verschiedener Flächen, wobei bei einer Identität oder zumindest einer Ähnlichkeit innerhalb einer festgelegten Toleranz, ein zu dem jeweils passendsten Referenzflächenparameter korrespondierender Geräteparameter zur Einstellung an dem Bodenbearbeitungsgerät ausgewählt wird.

Neben Bearbeitungsrobotern kommen auch von einem Nutzer handgeführte Bodenbearbeitungsgeräte in Frage, welche über eine gemeinsam zugängliche Datenbank miteinander vernetzt sind.

Es wird vorgeschlagen, dass das Bodenbearbeitungsgerät den Flächenparameter vor und nach einer Bearbeitung der Fläche detektiert, wobei aus den Detektionsergebnissen eine Änderung des Flächenparameters ermittelt wird. Durch die Erfassung des Flächenparameters vor und nach einer Bearbeitung der Fläche kann ermittelt und gegebenenfalls einem Nutzer des Bodenbearbeitungsgerätes mitgeteilt werden, welcher Bearbeitungserfolg erreicht wurde. Die ermittelte Änderung des Flächenparameters, bspw. eines Verschmutzungsgrades der bearbeiteten Fläche, kann dem Nutzer angezeigt werden. Dies kann bspw. durch die Darstellung des Verschmutzungsgrades in einer Umgebungskarte des Bodenbearbeitungsgerätes erfolgen, wobei eine entsprechende Markierung, bspw. eine prozentuale Änderung eines Verschmutzungsgrades oder dergleichen, angezeigt wird. Beispielsweise kann ein farbiges Ampelsystem verwendet werden, welches unterschiedliche Abstufungen des Verschmutzungsgrades farblich mit rot, gelb und grün markiert. Alternativ oder zusätzlich zu der Mitteilung der Änderung des Flächenparameters an einen Nutzer kann die Änderung des Flächenparameters ebenfalls in der Datenbank hinterlegt werden, so dass diese Information nicht nur dem betreffenden Bodenbearbeitungsgerät selbst, sondern auch weiteren Bodenbearbeitungsgeräten zur Verfügung steht, welche ebenso auf die Datenbank zugreifen können.

Es wird vorgeschlagen, dass anhand einer Änderung des Flächenparameters ein Referenzflächenparameter und/oder ein einzustellender Geräteparameter berechnet und in der Datenbank abgespeichert wird. Durch diese Ausgestaltung wird ein Verfahren geschaffen, mit welchem ein Bodenbearbeitungsgerät selbstlernend betrieben werden kann, indem aus einer Änderung eines Flächenparameters wiederum ein Referenzflächenparameter und/oder ein Geräteparameter erstellt bzw. abgeändert wird, welcher dann wiederum einem der Bodenbearbeitungsgeräte für zukünftige Bodenbearbeitungsaufgaben zur Verfügung steht. Sofern bspw. eine vorherige Einstellung eines Geräteparameters bei einem bestimmten Ausgangs-Flächenparameter zu einem optimalen Bearbeitungsergebnis geführt hat, wird dieser Geräteparameter als besonders vorteilhaft in der Datenbank abgespeichert und ggf. andere, weniger Erfolg versprechende, Geräteparameter gelöscht, so dass dasselbe Bodenbearbeitungsgerät oder auch andere Bodenbearbeitungsgeräte bei einer zeitlich späteren, ähnlichen Bearbeitungsaufgabe direkt einen Geräteparameter erhalten, welcher voraussichtlich ein besonders optimales Bearbeitungsergebnis hervorbringt. Mittels des vorgeschlagenen Vorher- Nachher-Vergleichs kann ein Bodenbearbeitungsgerät somit seine Reinigungsstrategie bzw. eine Variation eines Geräteparameters für die Bearbeitung einer gleichartigen Fläche mit ähnlichen Flächenparametern in Abhängigkeit von einem erfahrungsgemäß bestmöglichen Bearbeitungsergebnis anpassen. Ein in der Datenbank abgespeicherter Referenzflächenparameter korrespondiert somit mit Geräteparametern, welche zuvor eine gewünschte, optimale Änderung eines Flächenparameters bewirkt haben, bspw. eine Änderung des Flächenparameters "Verschmutzung" von "sehr hoch" zu "sauber".

Des Weiteren wird vorgeschlagen, dass das Bodenbearbeitungsgerät auf eine Datenbank eines internen Servers eines Bodenbearbeitungsgerätes und/oder eine Datenbank eines relativ zu den Bearbeitungsgeräten externen Servers zugreift. Die Datenbank kann somit auf einem Server hinterlegt sein, welcher entweder ein interner Server eines Bodenbearbeitungsgerätes ist und/oder ein relativ zu allen Bodenbearbeitungsgeräten des Netzwerks extern angeordneter Server. Ein solcher externer Server kann bspw. ein lokaler Server eines Heimnetzwerkes oder ein Cloud-Server sein, welcher an ein globales Rechnernetz, wie bspw. das Internet, angeschlossen ist.

Es wird vorgeschlagen, ein von einer Recheneinrichtung des Bodenbearbeitungsgerätes ausgewählter Geräteparameter an einen Nutzer des Bodenbearbeitungsgerätes ausgegeben wird und/oder automatisch an dem Bodenbearbeitungsgerät eingestellt wird. Das Verfahren kann somit beinhalten, dass ein von der Recheneinrichtung des Bodenbearbeitungsgerätes ausgewählter Geräteparameter für eine durchzuführende Bodenbearbeitung automatisch an dem Bodenbearbeitungsgerät eingestellt wird, bspw. mittels einer Steuereinrichtung des Bodenbearbeitungsgerätes, oder alternativ einem Nutzer des Bodenbearbeitungsgerätes, bspw. auf einem Display, angezeigt wird, woraufhin dieser dann manuell einen Steuerbefehl an das Bodenbearbeitungsgerät übermitteln kann. Die Anzeige kann dabei auf einem Display des Bodenbearbeitungsgerätes selbst oder aber auf einem externen Mobilgerät, wie bspw. einem Mobiltelefon des Nutzers, welches in Kommunikationsverbindung mit der Recheneinrichtung des Bodenbearbeitungsgerätes steht, erfolgen. Nach der Anzeige kann der Nutzer den vorgeschlagenen Geräteparameter bestätigen, woraufhin besonders vorteilhaft direkt eine Weiterleitung eines Steuerbefehls an das Bodenbearbeitungsgerät erfolgt.

Es wird vorgeschlagen, dass der Flächenparameter eine Bodenart, ein Verschmutzungsgrad, ein Feuchtegrad und/oder eine Position des Bodenbearbeitungsgerätes auf der Fläche ist. Eine Bodenart kann bspw. die Unterscheidung in Hartboden bzw. Teppichboden beinhalten, wobei des Weiteren eine feinere Unterteilung in Hartböden wie Fliesen, Laminat, Parkett, Kork und dergleichen möglich ist bzw. in kurzflorige bzw. langflorige Teppichböden. Ein Verschmutzungsgrad kann verschiedene Abstufungen von Flächenverschmutzungen beinhalten, bspw. unterteilt in sauber, leicht, mittel und stark oder ähnliche. Des Weiteren kann der Flächenparameter auch Positionsdaten des Bodenbearbeitungsgerätes in einer Umgebungskarte des Bodenbearbeitungsgerätes beinhalten. Des Weiteren sind auch andere Flächenparameter zu unterscheiden, wie bspw. ein Feuchtegrad der Fläche, eine Farbe der Fläche, eine Rauigkeit der Fläche, eine Anwesenheit von Objekten auf der Fläche, eine Unebenheit, Steigung, Neigung der Fläche usw. Des Weiteren kann der Flächenparameter auch eine Information über einen für eine Bearbeitung gesperrten Bereich einer Fläche beinhalten, bspw. einen Bereich mit einem Bodenbelag, welcher durch eine bestimmte Bearbeitungsweise beschädigt würde, und/oder einen Bereich, welcher seinerseits eine Beschädigung des Bodenbearbeitungsgerätes bewirken würde.

Es wird vorgeschlagen, dass der Flächenparameter mittels einer Detektionseinrichtung des Bodenbearbeitungsgerätes detektiert wird. Diese Detektionseinrichtung kann insbesondere einen Bildsensor, einen Trübungssensor und/oder einen Intensitätssensor aufweisen. Dabei sind auch Kombinationen dieser Detektionseinrichtungen möglich. Insbesondere sind Detektionseinrichtungen vorteilhaft, welche eine Kamera, einen Trübungssensor, eine Messwalze und/oder einen Reflektionssensor beinhalten. Im Falle einer Kamera weist die Detektionseinrichtung einen Bildsensor auf, mit welchem ein Bild der Fläche in einem verschmutzten Zustand aufgenommen wird. Die verschmutzte Fläche, welche eine Aussage über den Flächenparameter Verschmutzung zulässt, wird dann mit Referenzflächenparametern der Datenbank verglichen, zu welchen für eine solche Bodenart und Verschmutzung der Fläche optimale Geräteparameter hinterlegt sind und für die nachfolgende Bearbeitung der Fläche an dem Bodenbearbeitungsgerät eingestellt werden können. Des Weiteren kann die Kamera nach der erfolgten Reinigung der Fläche ein weiteres Bild in einem gereinigten Zustand aufnehmen, wobei die Veränderungen des Verschmutzungsgrades bestimmt werden. Die Änderung des Flächenparameters Verschmutzung wird wiederum in der Datenbank hinterlegt und mit den vorher angewendeten Geräteparametern verknüpft, so dass in der Datenbank eine Information darüber gespeichert ist, welche Geräteparametereinstellung zu welchem Reinigungsergebnis geführt hat. In dem Fall, dass die Detektionseinrichtung bspw. einen Trübungssensor beinhaltet, wird ein Verschmutzungsgrad einer zu bearbeitenden Fläche bspw. anhand einer Trübung einer Reinigungsflüssigkeit des Bodenbearbeitungsgerätes bestimmt. Diese Trübung wird mit einem vorbekannten Referenzflächenparameter verglichen, so dass ein für eine optimale Reinigung empfohlener Geräteparameter ermittelt werden kann. Ebenso kann sowohl bei Trockenreinigung als auch bei Feuchtreinigung, ein veränderter Farbwert einer Oberfläche einer Reinigungswalze des Bodenbearbeitungsgerätes mit einem Referenzflächenparameter verglichen werden, wobei bspw. über einen korrespondierenden Grauwert ein aktueller Verschmutzungsgrad der Fläche bestimmt werden kann. Des Weiteren kann ein Intensitätssensor des Bodenbearbeitungsgerätes eine Intensitätsmessung vornehmen. Insbesondere kann vor und nach der Bearbeitung einer Fläche eine Messung eines Reflektionsgrades erfolgen, deren Ergebnis einen Rückschluss auf den Verschmutzungsgrad der Fläche zulässt. Eine solche Detektion kann während der Bearbeitung der Fläche oder auch im Anschluss daran durchgeführt werden.

Schließlich kann das Verfahren vorsehen, dass als Geräteparameter eine Bearbeitungsart, eine Bearbeitungshäufigkeit, eine Bearbeitungsintensität, eine Reinigungsmittelverwendung, eine Dichtelementstellung, eine Drehzahl, eine Fahrgeschwindigkeit, ein Andruckgewicht auf die zu bearbeitende Fläche und/oder eine Gerätezubehörverwendung variiert wird. Bei der Bearbeitungsart kann es sich bspw. um eine Reinigungsart, wie feucht oder trocken, handeln. Eine Bearbeitungsintensität kann eine einmalige oder mehrmalige Überfahrt über einen Teilbereich der Fläche vorsehen. Eine Reinigungsmittelverwendung kann eine Art und/oder Menge eines auf die Fläche aufgebrachten Reinigungsmittels beinhalten. Eine Bearbeitungsintensität kann des Weiteren eine Drehzahl eines Reinigungselementes, eine Fahrgeschwindigkeit des Bodenbearbeitungsgerätes, einen Trocknungsvorgang der Fläche, das Aktivieren einer Seitenbürste oder Seitenreinigungseinrichtung beinhalten. Des Weiteren kann auch die Einstellung einer Position von Dichtelementen, wie bspw. Dichtlippen und/oder Borstenelementen, vorgesehen sein. Ein Geräteparameter kann des Weiteren die Verwendung von Gerätezubehör vorsehen, beispielsweise die Verwendung einer zusätzlichen Walze, Bürste, Saugeinheit und weiteres.

Neben dem zuvor dargestellten Verfahren zum Betrieb eines Bodenbearbeitungsgerätes wird mit der Erfindung des Weiteren ein System aus mindestens zwei Bodenbearbeitungsgeräten und mindestens einem gemeinsamen Server, auf welchen die Bodenbearbeitungsgeräte zugreifen, vorgeschlagen, wobei die Bodenbearbeitungsgeräte eingerichtet sind, sich über eine zu bearbeitende Fläche zu bewegen und die Fläche in Abhängigkeit von einem Flächenparameter der Fläche, nämlich einer Bodenart und/oder einem Verschmutzungsgrad der Fläche, zu bearbeiten, nämlich zu reinigen, wobei die Bodenbearbeitungsgeräte eingerichtet sind, einen Geräteparameter des Bodenbearbeitungsgerätes für die Bearbeitung der Fläche in Abhängigkeit von dem Flächenparameter einzustellen, wobei der Server eine den Bodenbearbeitungsgeräten gemeinsam zugeordnete Datenbank aufweist, in welcher ein Geräteparameter, und/oder ein Flächenparameter und/oder eine Änderung eines Flächenparameters und/oder ein Referenzflächenparameter hinterlegt ist, und wobei das System zur Durchführung eines zuvor beschriebenen Verfahrens ausgebildet ist.

Des Weiteren kann das System so ausgestaltet sein, dass der Server ein interner Server eines Bodenbearbeitungsgerätes und/oder ein relativ zu den Bodenbearbeitungsgeräten extern ausgebildeter Server ist.

Insgesamt ist das vorgeschlagene System damit zum Durchführen eines zuvor vorgeschlagenen Verfahrens geeignet. Die zuvor in Bezug auf das Verfahren beschriebenen Merkmale gelten dabei entsprechend auch für das erfindungsgemäße System.

Die Bodenbearbeitungsgeräte können bspw. selbsttätig verfahrbare Geräte oder auch handgeführte Geräte sein. Des Weiteren können die Bodenbearbeitungsgeräte zur Durchführung einer feuchten und/oder trockenen Reinigung ausgebildet sein. Die Bodenbearbeitungsgeräte stehen mit dem gemeinsamen Server bspw. über eine Kommunikationsverbindung per Funk, bspw. Bluetooth oder WLAN, in Verbindung. Alternativ können die Bodenbearbeitungsgeräte und der Server auch mittels einer Kabelverbindung verbunden sein. Der Server kann insbesondere in einem der Bodenbearbeitungsgeräte integriert sein, so dass die anderen Bodenbearbeitungsgeräte von außen darauf zugreifen. Des Weiteren kann der gemeinsame Server jedoch auch ein - bezogen auf alle Bodenbearbeitungsgeräte des Systems - externer Server sein, welcher einem separaten Computer zugeordnet ist, der in ein globales Netzwerk, wie das Internet, oder in ein lokales Heimnetzwerk oder dergleichen eingebunden ist.

### Kurze Beschreibung der Zeichnung

Im Folgenden wird die Erfindung anhand eines Ausführungsbeispiels näher erläutert. Es zeigt:

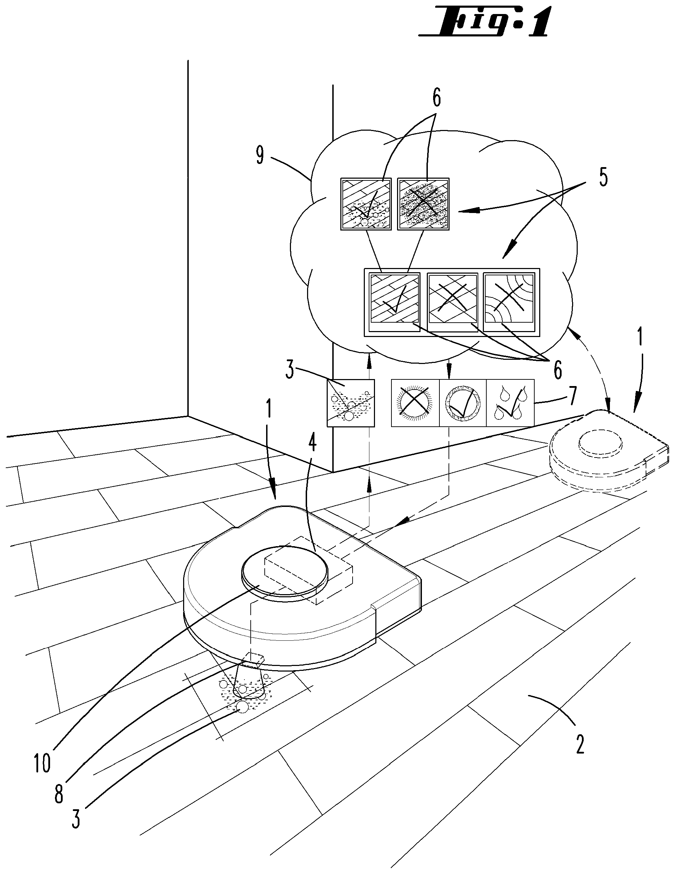

- Fig. 1: ein System aus zwei Bodenbearbeitungsgeräten und einem Server.

### Beschreibung der Ausführungsform

Figur 1 zeigt einen Teil eines Raumes mit einer Fläche 2, welche hier ein Fußboden aus Holzdielen ist. Auf der Fläche 2 verfahren zwei Bodenbearbeitungsgeräte 1. Diese sind hier beispielsweise ein Saugroboter und ein Wischroboter. Jedes der Bodenbearbeitungsgeräte 1 verfügt über eine Abstandsmesseinrichtung 10, um Abstände zu Objekten und Raumbegrenzungen messen und daraus eine Karte der Umgebung erstellen zu können. Auf der Basis dieser Karte kann das Bodenbearbeitungsgerät 1 innerhalb der Umgebung navigieren und seinen Standort bestimmen. Die Abstandsmesseinrichtung 10 ist hier beispielsweise eine Triangulationsmesseinrichtung mit einer Lichtquelle, welche einen Lichtstrahl auf Objekte und/oder Raumbegrenzungen innerhalb der Umgebung richtet und das reflektierte Lichtsignal empfängt. Daraus kann ein Abstand zu dem jeweiligen Objekt bzw. der jeweiligen Raumbegrenzung errechnet werden. Der von der Lichtquelle emittierte Lichtstrahl kann in einem Winkelbereich von 360° um das Bodenbearbeitungsgerät 1 herum rotiert werden, so dass eine Rundum-Abstandsmessung möglich ist.

Das in der Figur vorne dargestellte Bodenbearbeitungsgerät 1 verfügt exemplarisch über eine Detektionseinrichtung 8, welche unterseitig des Bodenbearbeitungsgerätes 1 angeordnet ist. Diese Detektionseinrichtung 8 dient zur Detektion von Flächenparametern 3 der Fläche 2, auf welcher das jeweilige Bodenbearbeitungsgerät 1 verfährt. Die von der Detektionseinrichtung 8 detektierten Flächenparameter 3 sind hier beispielsweise eine Bodenart der Fläche 2 und ein Verschmutzungsgrad der Fläche 2. Die Detektionseinrichtung 8 funktioniert dabei mittels eines Bildsensors und eines Intensitätssensors, wobei der Bildsensor ein Bild der zu reinigenden Fläche 2 unterhalb des Bodenbearbeitungsgerätes 1 aufnimmt, und wobei der Intensitätssensor einen Lichtstrahl auf die Fläche 2 unterhalb des Bodenbearbeitungsgerätes 1 richtet und das von der Fläche 2 reflektierte Licht empfängt. Anhand der Intensitätsdifferenz des emittierten bzw. empfangenen Lichtes und/oder anhand des Reflektionsgrades der Fläche 2 an dieser Stelle, kann auf die Verschmutzung geschlossen werden.

Die von dem Bildsensor und dem Intensitätssensor aufgenommenen Bilder bzw. Messwerte werden an eine Recheneinrichtung 4 des Bodenbearbeitungsgerätes 1 weitergeleitet.

Die Recheneinrichtung 4 des Bodenbearbeitungsgerätes 1 steht in Kommunikationsverbindung mit einem Server 9, welcher hier ein mit dem Internet verbundener Cloud-Server ist. Um sich mit dem Server 9 zu verbinden, verfügt das Bodenbearbeitungsgerät 1 über ein WLAN-Modul, mit welchem sich das Bodenbearbeitungsgerät 1 in ein Heimnetzwerk einloggen kann und von dort aus über einen Router mit dem Internet bzw. dem Server 9 verbunden wird. Auf dem Server 9 ist eine Datenbank 5 gespeichert, welche Referenzflächenparameter 6 und Informationen über zu den Referenzflächenparametern 6 korrespondierende Geräteparameter 7 enthält. Die Datenbank 5 kann bspw. in einem besonders vorteilhaften Fall eine Tabelle (nicht dargestellt) mit Zeilen und Spalten sein, wobei bspw. die Zeilen Referenzflächenparameter 6 zu verschiedenen Bodenarten und die Spalten Referenzflächenparameter 6 zu verschiedenen Verschmutzungsgraden betreffen. Innerhalb der Tabelle sind dann für eine jeweilige bestimmte Kombination aus Bodenart und Verschmutzungsgrad geeignete an dem Bodenbearbeitungsgerät 1 einzustellende Geräteparameter 7 gespeichert. Bei der Wahl der Bodenart "Holzdielen" und dem Verschmutzungsgrad "Mittel" kann man bspw. anhand des Kreuzungsbereiches der jeweiligen Zeile und der jeweiligen Spalte die optimal einzustellenden Geräteparameter 7 für das Bodenbearbeitungsgerät 1 ablesen.

Gemäß dem gezeigten Ausführungsbeispiels sendet die Recheneinrichtung 4 des Bodenbearbeitungsgerätes 1 die detektierten Flächenparameter 3 Bodenart und Verschmutzungsgrad an den Server 9, wo diese mit in der Datenbank 5 gespeicherten entsprechenden Referenzflächenparametern 6 verglichen werden. Sofern eine Übereinstimmung gefunden wird bzw. ein nächstliegender Referenzflächenparameter 6 für den jeweiligen Flächenparameter 3 ermittelt wird, gibt der Server 9 die korrespondierenden Geräteparameter 7 an die Recheneinrichtung 4 des Bodenbearbeitungsgerätes 1 aus. Die Recheneinrichtung 4 empfängt diese Geräteparameter 7 und stellt hier für eine Reinigung der Fläche 2 eine Bearbeitungsart "Feuchtreinigung" sowie die Verwendung einer textilen Reinigungswalze (anstatt einer Bürste) ein. Daraufhin steuert eine Steuereinrichtung des Bodenbearbeitungsgerätes 1 eine Fahrt derart, dass das Bodenbearbeitungsgerät 1 über den entsprechenden Teilbereich der Fläche 2 bzw. die gesamte Fläche 2 innerhalb des betreffenden Raums verfährt. Dabei rotiert die Reinigungswalze unter Flüssigkeitsauftrag über die Fläche 2.

Wie auch das exemplarisch zuvorderst in der Figur dargestellte Bodenbearbeitungsgerät 1 greift das zweite Bodenbearbeitungsgerät 1 ebenfalls auf die Datenbank 5 des Servers 9 zu und übermittelt Flächenparameter 3 an die Datenbank 5. Des Weiteren können noch weitere Bodenbearbeitungsgeräte 1 in Kommunikationsverbindung mit dem Server 9 stehen und auf die Datenbank 5 zugreifen. Die Kommunikation mit dem Server 9 und die Übermittlung von Flächenparametern 3 an die Datenbank 5 bzw. der Empfang von Geräteparametern 7 von der Datenbank 5 erfolgt dabei wie zuvor in Bezug auf das erste Bodenbearbeitungsgerät 1 beschrieben.

Nach erfolgter Bearbeitung, d.h. Reinigung, der Fläche 2 übermittelt das Bodenbearbeitungsgerät 1 wiederum die aktuell detektierten Flächenparameter 3 der gereinigten Fläche 2 an die Datenbank 5 des Servers 9. Die aktuell detektierten Flächenparameter 3 sind diejenigen Flächenparameter 3, welche bereits vor der Reinigung detektiert wurden, hier nämlich eine Bodenart und ein Verschmutzungsgrad. Die Datenbank 5 speichert diese Flächenparameter 3 in Verbindung mit den zur Reinigung verwendeten Geräteparametern 7 ab und erstellt je nach dem erzielten Reinigungsergebnis ggf. geänderte Geräteparameter 7 für eine zukünftige Reinigung der Fläche 2. Dabei können die Geräteparameter 7 ggf. von den zuvor verwendeten Geräteparametern 7 abweichen, nämlich dann, wenn bspw. anhand eines Betrages einer Änderung des Flächenparameters 3 erkannt wurde, dass die Reinigung aufgrund der eingestellten Geräteparameter 7 zu schwach oder zu stark ausgefallen ist. Somit ergibt sich ein selbstlernendes System, bei welchem die in der Datenbank 5 gespeicherten Referenzflächenparameter 6 und die korrespondierenden Geräteparameter 7 in Abhängigkeit von erzielten Reinigungsergebnissen angepasst werden können. Von dieser selbstlernenden Funktion des Systems profitieren alle Bodenbearbeitungsgeräte 1, die in Kommunikationsverbindung mit dem Server 9 stehen und auf die Datenbank 5 zugreifen.

Sofern die Bodenbearbeitungsgeräte 1 die Flächenparameter 3 der Fläche 2 vor und nach einer Bearbeitung detektieren, bspw. einen Verschmutzungsgrad vor der Reinigung und einen Verschmutzungsgrad nach der Reinigung, kann entweder die Recheneinrichtung 4 des Bodenbearbeitungsgerätes 1 eine Änderung des Flächenparameters 3 berechnen, oder die Flächenparameter 3 an die Datenbank 5 des Servers 9 übermitteln, woraufhin dort eine Berechnung der Änderung des Flächenparameters 3 durchgeführt wird. Sofern die Recheneinrichtung 4 des Bodenbearbeitungsgerätes 1 die Änderung des Flächenparameters 3 selbst ermittelt, kann diese ggf. ebenso Geräteparameter 7 erstellen bzw. verändern und dann an die Datenbank 5 des Servers übermitteln. Alternativ kann auch die Erstellung bzw. Änderung der Flächenparameter 3 und/oder Referenzflächenparameter 6 und/oder Geräteparameter 7 der Datenbank 5 des Servers 9 vorbehalten sein.

## Patentansprüche

1. Verfahren zum Betrieb eines Bodenbearbeitungsgerätes (1), wobei sich das Bodenbearbeitungsgerät (1) über eine zu bearbeitende Fläche (2) bewegt und eine Bearbeitung der Fläche (2), nämlich eine Reinigung der Fläche (2), in Abhängigkeit von einem Flächenparameter (3) der Fläche (2) durchführt, wobei der Flächenparameter (3) eine Bodenart und/oder ein Verschmutzungsgrad ist, wobei ein Geräteparameter (7) des Bodenbearbeitungsgerätes (1) für die Bearbeitung der Fläche (2) in Abhängigkeit von dem Flächenparameter (3) variiert wird, wobei der Flächenparameter (3) mit in einer Datenbank (5) hinterlegten Referenzflächenparametern (6) verglichen wird, wobei ein zu einem dem Flächenparameter (3) nächstliegenden Referenzflächenparameter (6) korrespondierender Geräteparameter (7) ausgewählt und für eine nachfolgende Bearbeitung der Fläche (2) an dem Bodenbearbeitungsgerät (1) eingestellt wird, wobei mehrere Bodenbearbeitungsgeräte (1) auf die Datenbank (5) zugreifen und einen Geräteparameter (7) und/oder einen Flächenparameter (3) und/oder eine Änderung eines Flächenparameters (3) und/oder einen Referenzflächenparameter (6) zur gemeinsamen Nutzung in der Datenbank (5) hinterlegen und/oder auswählen, wobei ein Bodenbearbeitungsgerät (1) eine Bodenbearbeitung gemäß eines ausgewählten Geräteparameters (7) durchführt und nach abgeschlossener Bodenbearbeitung erneut den Flächenparameter (3) der bearbeiteten Fläche (2) detektiert und an die Datenbank (5) übermittelt, **dadurch gekennzeichnet, dass** die Datenbank (5) den Flächenparameter (3) in Verbindung mit den zur Flächenbearbeitung verwendeten Geräteparametern (7) abspeichert und in Abhängigkeit von einem erzielten Reinigungsergebnis einen in der Datenbank (5) gespeicherten Geräteparameter (7) anpasst, und wobei die Änderung des Flächenparameters in der Datenbank (5) hinterlegt und mit den vorher angewendeten Geräteparametern (7) verknüpft wird, sodass in der Datenbank (5) eine Information darüber gespeichert ist, welche Geräteparametereinstellung zu welchem Bodenbearbeitungsergebnis geführt hat.

2. Verfahren nach Anspruch 1, **dadurch gekennzeichnet, dass** das Bodenbearbeitungsgerät (1) den Flächenparameter (3) vor und nach einer Bearbeitung der Fläche (2) detektiert, wobei aus den Detektionsergebnissen eine Änderung des Flächenparameters (3) ermittelt wird.

3. Verfahren nach Anspruch 2, **dadurch gekennzeichnet, dass** anhand einer Änderung des Flächenparameters (3) ein Referenzflächenparameter (6) und/oder ein einzustellender Geräteparameter (7) berechnet und in der Datenbank (5) abgespeichert wird.

4. Verfahren nach einem der vorhergehenden Ansprüche, **dadurch gekennzeichnet, dass** das Bodenbearbeitungsgerät (1) auf eine Datenbank (5) eines internen Servers (9) eines Bodenbearbeitungsgerätes (1) und/oder eine Datenbank (5) eines relativ zu den Bodenbearbeitungsgeräten (1) externen Servers (9) zugreift.

5. Verfahren nach einem der vorhergehenden Ansprüche, **dadurch gekennzeichnet, dass** ein von einer Recheneinrichtung (4) des Bodenbearbeitungsgerätes (1) ausgewählter Geräteparameter (7) an einen Nutzer des Bodenbearbeitungsgerätes (1) ausgegeben wird und/oder automatisch an dem Bodenbearbeitungsgerät (1) eingestellt wird.

6. Verfahren nach einem der vorhergehenden Ansprüche, **dadurch gekennzeichnet, dass** der Flächenparameter (3) ein Feuchtegrad und/oder eine Position des Bodenbearbeitungsgerätes (1) auf der Fläche (2) ist.

7. Verfahren nach einem der vorhergehenden Ansprüche, **dadurch gekennzeichnet, dass** der Flächenparameter (3) mittels einer Detektionseinrichtung (8) des Bodenbearbeitungsgerätes (1), insbesondere mittels eines Bildsensors, eines Trübungssensors und/oder eines Intensitätssensors, detektiert wird.

8. Verfahren nach einem der vorhergehenden Ansprüche, **dadurch gekennzeichnet, dass** als Geräteparameter (7) eine Bearbeitungsart, eine Bearbeitungshäufigkeit, eine Bearbeitungsintensität, eine Reinigungsmittelverwendung, eine Dichtelementstellung, eine Drehzahl, eine Fahrgeschwindigkeit, ein Andruckgewicht auf die zu bearbeitende Fläche (2) und/oder eine Gerätezubehörverwendung variiert wird.

9. System aus mindestens zwei Bodenbearbeitungsgeräten (1) und mindestens einem gemeinsamen Server (9), auf welchen die Bodenbearbeitungsgeräte (1) zugreifen, wobei die Bodenbearbeitungsgeräte (1) eingerichtet sind, sich über eine zu bearbeitende Fläche (2) zu bewegen und die Fläche (2) in Abhängigkeit von einem Flächenparameter (3) der Fläche (2), nämlich einer Bodenart und/oder einem Verschmutzungsgrad der Fläche (2), zu bearbeiten, nämlich zu reinigen, und wobei die Bodenbearbeitungsgeräte (1) eingerichtet sind, einen Geräteparameter (7) des Bodenbearbeitungsgerätes (1) für die Bearbeitung der Fläche (2) in Abhängigkeit von dem Flächenparameter (3) einzustellen, wobei der Server (9) eine den Bodenbearbeitungsgeräten (1) gemeinsam zugeordnete Datenbank (5) aufweist, in welcher ein Geräteparameter (7) und/oder ein Flächenparameter (3) und/oder ein Referenzflächenparameter (6) und/oder eine Änderung eines Flächenparameters (3) hinterlegt ist, **dadurch gekennzeichnet, dass** das System zur Durchführung eines Verfahrens nach einem der vorhergehenden Ansprüche ausgebildet ist.

10. System nach Anspruch 9, **dadurch gekennzeichnet, dass** der Server (9) ein interner Server (9) eines Bodenbearbeitungsgerätes (1) und/oder ein relativ zu den Bodenbearbeitungsgeräten (1) externer Server (9) ist.

## Claims

1. Method for operating a floor treatment device (1), the floor treatment device (1) moving over a surface (2) to be treated and a treatment of the surface (2), namely cleaning of the surface (2), being carried out on the basis of a surface parameter (3) of the surface (2), the surface parameter (3) being a floor type and/or a dirt level, a device parameter (7) of the floor treatment device (1) for treating the surface (2) being varied on the basis of the surface parameter (3), the surface parameter (3) being compared with reference surface parameters (6) stored in a database (5), a device parameter (7) corresponding to a reference surface parameter (6) closest to the surface parameter (3) being selected and set on the floor treatment device (1) for a subsequent treatment of the surface (2), a plurality of floor treatment devices (1) accessing the database (5) and storing, for common use, and/or selecting a device parameter (7) and/or a surface parameter (3) and/or a change to a surface parameter (3) and/or a reference surface parameter (6) in the database (5), a floor treatment device (1) carrying out a floor treatment according to a selected device parameter (7) and, after the floor treatment has been completed, the surface parameter (3) of the treated surface (2) being detected again and transmitted to the database (5), **characterised in that** the database (5) stores the surface parameter (3) in conjunction with the device parameters (7) used for surface treatment and adjusts a device parameter (7) stored in the database (5) on the basis of a cleaning result achieved, and the change to the surface parameter being stored in the database (5) and being linked to the previously applied device parameters (7) so that information is stored in the database (5) as to what device parameter setting has led to what floor treatment result.

2. Method according to claim 1, **characterised in that** the floor treatment device (1) detects the surface parameter (3) before and after a treatment of the surface (2), a change to the surface parameter (3) being determined from the detection results.

3. Method according to claim 2, **characterised in that** a reference surface parameter (6) and/or a device parameter (7) to be set is calculated on the basis of a change to the surface parameter (3) and is stored in the database (5).

4. Method according to any of the preceding claims, **characterised in that** the floor treatment device (1) accesses a database (5) of an internal server (9) of a floor treatment device (1) and/or a database (5) of a server (9) that is external relative to the floor treatment devices (1).

5. Method according to any of the preceding claims, **characterised in that** a device parameter (7) selected by a computing means (4) of the floor treatment device (1) is output to a user of the floor treatment device (1) and/or is automatically set on the floor treatment device (1).

6. Method according to any of the preceding claims, **characterised in that** the surface parameter (3) is a degree of moisture and/or a position of the floor treatment device (1) on the surface (2).

7. Method according to any of the preceding claims, **characterised in that** the surface parameter (3) is detected by means of a detection means (8) of the floor treatment device (1), in particular by means of an image sensor, a turbidity sensor and/or an intensity sensor.

8. Method according to any of the preceding claims, **characterised in that**, as device parameters (7), a type of treatment, a treatment frequency, a treatment intensity, a use of cleaning agent, a sealing element position, a rotational speed, a travel speed, a pressure weight on the surface (2) to be treated and/or a use of a device accessory is varied.

9. System of at least two floor treatment devices (1) and at least one common server (9) which the floor treatment devices (1) access, the floor treatment devices (1) being designed to move over a surface (2) to be treated and to treat, namely clean, the surface (2) on the basis of a surface parameter (3) of the surface (2), namely a floor type and/or a dirt level of the surface (2), and the floor treatment devices (1) being designed to set a device parameter (7) of the floor treatment device (1) for the treatment of the surface (2) on the basis of the surface parameter (3), the server (9) having a database (5) which is jointly assigned to the floor treatment devices (1) and in which a device parameter (7) and/or a surface parameter (3) and/or a reference surface parameter (6) and/or a change to a surface parameter (3) is stored, **characterised in that** the system is designed to carry out a method according to any of the preceding claims.

10. System according to claim 9, **characterised in that** the server (9) is an internal server (9) of a floor treatment device (1) and/or a server (9) that is external relative to the floor treatment devices (1).

## Revendications

1. Procédé pour faire fonctionner un dispositif de traitement de sol (1), dans lequel le dispositif de traitement de sol (1) se déplace sur une surface (2) à traiter et effectue un traitement de la surface (2), à savoir un nettoyage de la surface (2), en fonction d'un paramètre de surface (3) de la surface (2), le paramètre de surface (3) étant un type de sol et/ou un degré de salissure, dans lequel un paramètre de dispositif (7) du dispositif de traitement de sol (1) pour le traitement de la surface (2) est modifié en fonction du paramètre de surface (3), dans lequel le paramètre de surface (3) est comparé à des paramètres de surface de référence (6) stockés dans une base de données (5), dans lequel un paramètre de dispositif (7) correspondant à un paramètre de surface de référence (6) le plus proche du paramètre de surface (3) est sélectionné et réglé au niveau du dispositif de traitement de sol (1) pour le traitement subséquent de la surface (2), dans lequel plusieurs dispositifs de traitement de sol (1) accèdent à la base de données (5) et stockent et/ou sélectionnent dans la base de données (5) un paramètre de dispositif (7) et/ou un paramètre de surface (3) et/ou une modification d'un paramètre de surface (3) et/ou un paramètre de surface de référence (6) pour une utilisation commune, dans lequel un dispositif de traitement de sol (1) effectue un traitement du sol conformément à un paramètre de dispositif (7) sélectionné et, après avoir terminé le traitement du sol, détecte à nouveau le paramètre de surface (3) de la surface traitée (2) et le transmet à la base de données (5), **caractérisé en ce que** la base de données (5) enregistre le paramètre de surface (3) en liaison avec les paramètres de dispositif (7) utilisés pour le traitement du sol et, en fonction d'un résultat de nettoyage obtenu, adapte un paramètre de dispositif (7) enregistré dans la base de données (5), et dans lequel la modification du paramètre de surface est stockée dans la base de données (5) et est liée aux paramètres de dispositif (7) utilisés précédemment de manière qu'une information soit enregistrée dans la base de données (5) concernant quel réglage de paramètre de dispositif a conduit à quel résultat de traitement du sol.

2. Procédé selon la revendication 1, **caractérisé en ce que** le dispositif de traitement de sol (1) détecte le paramètre de surface (3) avant et après le traitement de la surface (2), une modification du paramètre de surface (3) étant déterminée à partir des résultats de la détection.

3. Procédé selon la revendication 2, **caractérisé en ce qu'**un paramètre de surface de référence (6) et/ou un paramètre de dispositif (7) à régler est calculé sur la base d'une modification du paramètre de surface (3) et enregistré dans la base de données (5).

4. Procédé selon l'une des revendications précédentes, **caractérisé en ce que** le dispositif de traitement de sol (1) accède à une base de données (5) d'un serveur interne (9) d'un dispositif de traitement de sol (1) et/ou à une base de données (5) d'un serveur externe (9) par rapport aux dispositifs de traitement de sol (1).

5. Procédé selon l'une des revendications précédentes, **caractérisé en ce qu'**un paramètre de dispositif (7) sélectionné par un dispositif de calcul (4) du dispositif de traitement de sol (1) est fournie en sortie à un utilisateur du dispositif de traitement de sol (1) et/ou est automatiquement réglé au niveau du dispositif de traitement de sol (1).

6. Procédé selon l'une des revendications précédentes, **caractérisé en ce que** le paramètre de surface (3) est un degré d'humidité et/ou une position du dispositif de traitement de sol (1) sur la surface (2).

7. Procédé selon l'une des revendications précédentes, **caractérisé en ce que** le paramètre de surface (3) est détecté au moyen d'un dispositif de détection (8) du dispositif de traitement de sol (1), en particulier au moyen d'un capteur d'image, d'un capteur de turbidité et/ou d'un capteur d'intensité.

8. Procédé selon l'une des revendications précédentes, **caractérisé en ce qu'**est/sont varié(s) comme paramètre(s) de dispositif (7) un type de traitement, une fréquence de traitement, une intensité de traitement, une utilisation de produit de nettoyage, une position d'élément d'étanchéité, une vitesse de rotation, une vitesse de déplacement, un poids de pression sur la surface (2) à traiter et/ou une utilisation d'accessoire du dispositif.

9. Système comprenant au moins deux dispositifs de traitement de sol (1) et au moins un serveur commun (9) auquel les dispositifs de traitement de sol (1) accèdent, dans lequel les dispositifs de traitement de sol (1) sont configurés pour se déplacer sur une surface (2) à traiter et pour traiter, à savoir pour nettoyer, la surface (2) en fonction d'un paramètre de surface (3) de la surface (2), à savoir un type de sol et/ou un degré de salissure de la surface (2), et dans lequel les dispositifs de traitement de sol (1) sont configurés pour régler un paramètre de dispositif (7) du dispositif de traitement de sol (1) pour le traitement de la surface (2) en fonction du paramètre de surface (3), dans lequel le serveur (9) comporte une base de données (5) qui est associée conjointement aux dispositifs de traitement de sol (1) et dans laquelle est stocké un paramètre de dispositif (7) et/ou un paramètre de surface (3) et/ou un paramètre de surface de référence (6) et/ou une modification d'un paramètre de surface (3), **caractérisé en ce que** le système est conçu pour exécuter un procédé selon l'une des revendications précédentes.

10. Système selon la revendication 9, **caractérisé en ce que** le serveur (9) est un serveur interne (9) d'un dispositif de traitement de sol (1) et/ou un serveur externe (9) par rapport aux dispositifs de traitement de sol (1).
